# EUROPEAN PATENT APPLICATION

(11) **EP 4 668 379 A1**
(43) Date of publication of application: **24.12.2025**
(21) Application number: 24785067.0
(22) Date of filing: 19.03.2024
(51) Int. Cl.: H01M 10/04, H01M 50/105, H01M 50/124, H01M 50/178, H01M 50/183, H05H 1/46

(54) **PLASMA TREATMENT METHOD FOR INSULATION DEFECT IMPROVEMENT IN BATTERY CELLS AND SECONDARY BATTERY MANUFACTURING METHOD INCLUDING SAME**

(30) Priority: 07.04.2023 KR 20230046322; 18.03.2024 KR 20240037361
(71) Applicant: LG Energy Solution, Ltd., Seoul 07335 (KR)
(72) Inventor: KIM, Wan Ju, Daejeon 34122 (KR); HWANG, Gyo Hyun, Daejeon 34122 (KR); RAH, Kyun Il, Daejeon 34122 (KR); LEE, Ji Hoon, Daejeon 34122 (KR); LEE, Sang Woo, Daejeon 34122 (KR)
(74) Representative: Goddar, Heinz J.
(86) International application number: PCT/KR2024/003400
(87) International publication number: WO 2024/210359

(57) **Abstract**

The present invention relates to a method for manufacturing a pouch-type secondary battery, and more specifically, relates to a plasma treatment method capable of improving sealing insulation performance of a pouch, a method for manufacturing a secondary battery, and a manufacturing device thereof. According to one example of the present invention, it is possible to provide a pouch-type secondary battery comprising: an upper pouch case having a metal layer and in which a polypropylene coating layer is formed on the lower surface, wherein the polypropylene coating layer is plasma surface-treated; a lower pouch case having a metal layer and in which a polypropylene coating layer is formed on the upper surface, wherein the polypropylene coating layer is plasma surface-treated; and a battery cell having leads having a metal layer and in which polypropylene coating layers are formed on the upper and lower surfaces, and when the upper pouch case and the lower pouch case are sealed by heat fusion, the upper and lower surfaces of the leads are each heat-fused between the upper pouch case and the lower pouch case, and characterized in that in the pouch sheet, the plasma surface treatment is performed to the sealing region and a temporary adhesion region near the sealing region.

## Description

### Technical Field

The present invention relates to a method for manufacturing a pouch-type secondary battery, and more specifically, relates to a plasma treatment method that can improve insulation performance of sealing of a pouch, a method for manufacturing a secondary battery, and a manufacturing device thereof.

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer batteries, hereinafter referred to as "LIPB"), and the like.

Lithium secondary batteries have a cycle life of about 500 cycles or more and a short charging time of about 1 to 2 hours or so, and are lighter to the extent of about 30% to 40% or so compared to nickel-hydrogen batteries, thereby enabling weight saving, and have the highest voltage (30 to 37V) per unit cell among existing secondary batteries, and excellent energy densities, so that they can have characteristics optimized for mobile devices.

Lithium secondary batteries can be manufactured as pouch-type secondary batteries by encapsulating a battery cell with a pouch which is an aluminum encapsulation material.

The pouch-type secondary battery may comprise a battery cell accommodated in a pouch as an encapsulating material, a lead tab electrically connected to electrode tabs of electrodes provided in the battery cell to be drawn out to the outside of the pouch, and an insulating film electrically insulating the lead tab. Particularly, the pouch may perform a function of sealing the battery cell accommodated therein by heat-fusing the inner surface of the pouch with the insulating film formed on the lead tab of the battery cell, or directly heat-fusing the inner surface of the pouch with the inner surface of the pouch. The insulating film is generally a polypropylene (PP) film.

The pouch sealing performs a function of sealing a certain space accommodating an electrolyte inside the pouch. When the battery cell is repeatedly charged/discharged, gas is generated, whereby the pressure inside the pouch increases, and thus for this reason, the pouch sealing requires high strength.

Meanwhile, upon sealing the pouch by heat fusion, the polypropylene (PP) film is melted and spread to be bonded. The polypropylene film does not only bond the pouch, but also separates the metal layer of the pouch, such as aluminum, from the electrolyte, thereby preventing corrosion of the metal layer, and preventing current from flowing through the pouch and thus increasing resistance.

Korean Laid-Open Patent Publication No. 10-2022-0154638 (hereinafter, referred to as a "prior patent") discloses a method of manufacturing a pouch-type secondary battery for making the sealing surface of the pouch uniform. Particularly, to expect an effect capable of maintaining the uniformity of the sealing surface even in a wide temperature range or a wide pressure range, it discloses sealing the pouch after plasma treatment.

However, according to the prior patent, only the plasma surface treatment and the uniformity of the sealing surface are considered, but the sealing strength aspect is not considered, and particularly, conditions and timing of the plasma surface treatment, and heat fusion conditions are not disclosed. Therefore, there is a need to propose specific plasma surface treatment devices and processes that can improve the sealing strength of the pouch.

Also, the sealing surface of the pouch is formed not only between pouches facing each other, but also between a pouch and a lead facing each other. Therefore, since the sealing strength between the pouch and the lead is also very important, its sealing strength must also be considered.

Furthermore, when sealing a pouch through heat fusion, a temporary adhesion region is formed near the sealing region. That is, as the opposing upper and lower polypropylene (PP) layers are melted and pressurized during the sealing process, the melted polypropylene moves out of the sealing region and into the inner side region of the pouch. At this time, beyond the sealing region, a region where the melted upper and lower polypropylene layers are bonded to each other occurs, which can be referred to as a temporary adhesion region.

Since the temporary adhesion region is not a pressurized region unlike the heat-fused sealing region, the polypropylene bond thickness is relatively large, so that it has poor hightemperature durability, and there is a risk of causing insulation problems. This is because if the bonds in the temporary adhesion region are broken due to the internal pressure increase of the pouch, and the like, the interlining made of aluminum may be exposed to the electrolyte. This is because the polypropylene coating layer performing an insulation function may be torn and removed.

The occurrence and problems of temporary adhesion regions form between a pouch and a lead, as well as between pouches. Therefore, the problems caused by the temporary adhesion region can be said to be problems that must be solved in pouch sealing as well.

The manufacturing of pouch-type secondary batteries is performed mainly for mass production rather than small quantity production, and particularly, the entire process is performed sequentially, so that it is very important to increase process efficiency, that is, the number of good products that can be produced in unit time. Therefore, there is a need to provide plasma surface treatment devices and processes, which are easily constructed and controlled while being organically and easily integrated into the conventional pouch-type secondary battery manufacturing process and manufacturing device, and moreover, pouch-type secondary battery manufacturing devices and processes.

### Disclosure

### Technical Problem

The present invention is intended to solve problems of conventional pouch-type secondary batteries.

Through one example of the present invention, it is intended to provide a pouch-type secondary battery significantly reducing pouch insulation defects by increasing sealing strength of a pouch in a sealing region and blocking occurrence of a temporary adhesion region, and a manufacturing device thereof and a manufacturing method thereof.

Through one example of the present invention, it is intended to provide a manufacturing device and a manufacturing method of a pouch-type secondary battery that can be easily integrated into the conventional manufacturing device and manufacturing method of a pouch-type secondary battery.

Through one example of the present invention, it is intended to provide a manufacturing device and a manufacturing method of a pouch-type secondary battery that can continuously and organically plasma-treat the pouch surface.

Through one example of the present invention, it is intended to provide a plasma surface treatment method capable of preventing occurrence of not only a temporary adhesion region between pouches but also, particularly, a temporary adhesion region between a pouch and a lead, or reducing sealing strength in the temporary adhesion region, and a method for manufacturing a pouch-type secondary battery comprising the same.

### Technical Solution

In order to achieve the above-described objects, according to one example of the present invention, it is possible to provide a pouch-type secondary battery manufacturing device comprising: a moving stage supporting a pouch before sealing, linearly moving the pouch in a first direction, and forming a first electrode; a plasma head forming a second electrode, and irradiating a surface of the pouch with a gas for generating plasma gas to improve sealing strength of the pouch after sealing; and an alternating current power supply applying alternating current power between the first electrode and the second electrode so that the plasma gas is irradiated to the surface of the pouch by discharging the gas.

In this example, the plasma discharge may be continuously performed and simultaneously the surface of the pouch may be plasma-treated.

It is preferable that the plasma head is provided to be spaced apart from the moving stage in a second direction perpendicular to the first direction.

The plasma head may be fixed and provided to irradiate the surface of the pouch with the gas downward in a vertical direction. Therefore, efficient plasma treatment may be performed as the supply direction of gas for discharge and the moving direction of plasma gas are the same as the direction of gravity.

It is preferable that the moving stage is provided to move the pouch at a constant speed. The moving stage may be provided to move the pouch at a constant speed, and the plasma head may irradiate the surface of the pouch moving while being supported by the moving stage with the gas for generating the plasma gas.

It is preferable that the plasma head continuously supplies gas for plasma discharge at a constant flow rate.

The gas discharged during plasma generation may contain argon (Ar). It is preferable that the argon is continuously sprayed at a flow rate of 6LPM.

The gas discharged during plasma generation may further contain nitrogen (N₂) or oxygen (O₂). The nitrogen or oxygen may be continuously sprayed at a flow rate of 40 to 60 sccm.

It is preferable that the linear movement velocity of the pouch before sealing is 10mm/s to 120mm/s. Under the same plasma conditions, a decrease in linear movement velocity means an increase in plasma treatment intensity.

The alternating current power supply may be provided to discharge gas with a power of 180W to 200W.

It is preferable that the sealing is performed by heat-fusing the pouch surface-treated using the plasma gas. That is, it is preferable that after plasma surface-treating the sealing region of the pouch, and then overlapping the sealing regions, the sealing is performed through heat fusion. By performing plasma surface treatment in the sealing region, it is possible to achieve improvement of the sealing strength.

In addition, it is preferable to perform the plasma surface treatment even in the vicinity of the sealing region, that is, in the temporary adhesion region where the melted PP layer flows from the sealing region. The upper and lower temporary adhesion regions are regions without overlapping each other, and are regions where the heat fusion is not performed. By performing the plasma surface treatment in the temporary adhesion region, it is possible to significantly lower the sealing strength.

Meanwhile, it is preferable that the plasma surface treatment is performed on the surface of the pouch in a lead region where the lead penetrates and the sealing is performed, whereas the plasma surface treatment is not performed on the lead. Through this, the sealing strength can be increased in the sealing region between the pouch and the lead, whereas the sealing strength can be significantly lowered in the temporary adhesion region between the pouch and the lead. T

The heat fusion may be performed for 1.2 seconds under 210 degrees Celsius and a pressure of 0.3MPa.

To achieve the above-described objects, according to one example of the present invention, it is possible to provide a method for manufacturing a pouch-type secondary battery comprising: a pouch supply step of continuously moving a pouch sheet in which a metal layer is coated with a polypropylene layer on a moving stage;

a plasma surface treatment step of applying an alternating current power between the moving stage and a plasma head, and discharging gas irradiated from the plasma head to irradiate a surface of the polypropylene layer of the pouch sheet with plasma gas; a casing step of forming a pouch case together with a battery cell having leads in which a metal layer is coated with a polypropylene layer by molding the plasma surface-treated pouch sheet; and a pouch sealing step of sealing the pouch case by forming a sealing region through heat fusion, and characterized in that in the pouch sheet, the plasma surface treatment is performed to the sealing region and a temporary adhesion region near the sealing region.

The plasma surface treatment may be excluded in the lead penetrating the sealing region. Also, the plasma surface treatment may be excluded in the lead penetrating the temporary adhesion region. Therefore, it is preferable that no separate plasma surface treatment is performed on the polypropylene layer of the lead.

It is preferable that a sealing strength of the sealing region between the pouch sheet and the lead is three times or more greater than a sealing strength of the temporary adhesion region between the pouch sheet and the lead. That is, it is preferable that the sealing strength in the temporary adhesion region is less than 1/3 or even lower relative to the sealing strength in the sealing region.

In the case of increasing the sealing strength in the temporary adhesion region, the metal layer may be exposed to the electrolyte by damaging the existing polypropylene layer of the pouch and/or lead when the sealing of the temporary adhesion region is damaged. On the other hand, in the case of lowering the sealing strength in the temporary adhesion region, the existing polypropylene layer of the pouch and/or lead is not affected when the sealing of the temporary adhesion region is damaged. Therefore, damage to insulation performance can be prevented because the metal layer is still protected by the polypropylene layer.

It is preferable that the sealing strength in the temporary adhesion region between the pouch sheet and the lead is less than 40N/15mm. This sealing strength is significantly lower than that of the case where the plasma surface treatment is not performed.

It is preferable that no adhesion occurs between opposing polypropylene layers in the temporary adhesion region between the pouch sheet and the lead. That is, the temporary adhesion region itself is generated, but the adhesion of the PP layer in the temporary adhesion region can be intentionally excluded.

In order to achieve the above-described objects, it is possible to provide a pouch-type secondary battery comprising: an upper pouch case having a metal layer and in which a polypropylene coating layer is formed on a lower surface, wherein the polypropylene coating layer is plasma surface-treated; a lower pouch case having a metal layer and in which a polypropylene coating layer is formed on an upper surface, wherein the polypropylene coating layer is plasma surface-treated; and a battery cell having leads having a metal layer and in which polypropylene coating layers are formed on upper and lower surfaces, and when the upper pouch case and the lower pouch case are sealed by heat fusion to form a sealing region, the upper and lower surfaces of the leads are each heat-fused between the upper pouch case and the lower pouch case, and characterized in that in the upper pouch case and the lower pouch case, a plasma surface treatment is performed to the sealing region and a temporary adhesion region near the sealing region.

It is preferable that a sealing strength of the sealing region between the upper or lower pouch case and the lead is three times or more greater than a sealing strength of the temporary adhesion region between the upper or lower pouch case and the lead.

It is preferable that the plasma surface treatment of the polypropylene coating layer in the lead is excluded.

The sealing strength in the temporary adhesion region between the upper or lower pouch case and the lead may be less than 40N/15mm.

In the upper and lower pouch cases, a carbon atom ratio on the plasma surface-treated surface may be reduced compared to a carbon atom ratio on the non-plasma surface-treated surface.

### Advantageous Effects

Through one example of the present invention, it is possible to provide a pouch-type secondary battery significantly reducing pouch insulation defects by increasing sealing strength of a pouch in a sealing region and blocking occurrence of a temporary adhesion region, and a manufacturing device thereof and a manufacturing method thereof.

Through one example of the present invention, it is possible to provide a manufacturing device and a manufacturing method of a pouch-type secondary battery that can be easily integrated into the conventional manufacturing device and manufacturing method of a pouch-type secondary battery.

Through one example of the present invention, it is possible to provide a manufacturing device and a manufacturing method of a pouch-type secondary battery that can continuously and organically plasma-treat the pouch surface.

Through one example of the present invention, it is possible to provide a plasma surface treatment method capable of preventing occurrence of not only a temporary adhesion region between pouches but also, particularly, a temporary adhesion region between a pouch and a lead, or reducing sealing strength in the temporary adhesion region, and a method for manufacturing a pouch-type secondary battery comprising the same.

### Description of Drawings

Figure 1 is a conceptual diagram of a pouch-type secondary battery manufacturing device according to one example of the present invention;
Figure 2 is a development diagram of a unit pouch;
Figure 3 is an exploded perspective diagram of a pouch-type secondary battery before casing;
Figure 4 is a perspective diagram of a pouch-type secondary battery after casing;
Figure 5 is a manufacturing flow of a pouch-type secondary battery according to one example of the present invention;
Figure 6 is schematic diagrams of cross-sectional changes in a sealing region and a temporary adhesion region during pouch sealing;
Figure 7 is a schematic diagram of a pouch-type secondary battery manufacturing device according to one example of the present invention;
Figure 8 is a table of plasma treatment and sealing process parameters, and sampling methods;
Figure 9 is cross-sectional images of sealing regions and temporary adhesion regions in pouch and lead portions;
Figure 10 is cross-sectional images of sealing regions and temporary adhesion regions in pouches and pouch portions;
Figure 11 is trend graphs of changes in sealing strength from a temporary adhesion region to a sealing region; and
Figure 12 is strength comparison graphs in a temporary adhesion region and a sealing region.

### Best Mode

Hereinafter, a pouch-type secondary battery manufacturing device according to one example of the present invention will be described in detail with reference to the attached drawings.

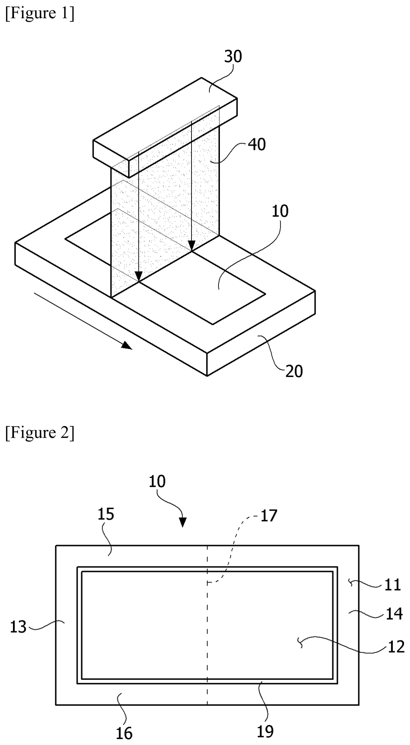

First, a device and a method plasma surface-treating a pouch will be described with reference to Figure 1.

The pouch (10) may be seated on a moving stage (20), and the moving stage (20) may be provided to linearly move the pouch in a first direction.

The pouch (10) may be linearly moved together with the moving stage (20), or only the pouch (10) may be linearly moved on the moving stage (20). Here, the pouch (10) is preferably moved in a horizontal direction. As one example, it is preferable that in a state where an upper surface facing a plasma head is maintained horizontally, it is moved in the pouch longitudinal direction (pouch supply direction).

The plasma head (30) may be provided at a location spaced apart from the moving stage (20). The plasma head (30) may be provided to supply plasma gas (40) to the surface of the pouch (10). The plasma head (30) may have a width corresponding to the width of the pouch (10). Therefore, it may be provided to supply the plasma gas (40) corresponding to the entire width of the pouch (10).

The plasma head may be positioned and fixed in a second direction perpendicular to the first direction. Therefore, the plasma gas (40) may be continuously supplied from the fixed plasma head, and the pouch (10) may continuously pass through a plasma section or region where the plasma gas (40) is supplied. In this instance, the plasma surface treatment is performed on the pouch (10).

The pouch (10) forms a bag accommodating a battery cell therein. Specifically, the sheet-shaped pouch (10) is cut and molded, and the facing edge surfaces of the pouch are heat-fused to seal the battery cell inside.

According to this example, the plasma surface treatment can be performed not only on the edge surface of the pouch that is heat-fused and sealed, but also on the inner surface of the pouch that is in close contact with the battery cell. That is, according to this example, the pouch on which the plasma surface treatment is performed may be a pouch before sealing and simultaneously a pouch sheet before cutting and molding for forming a bag.

When the pouch sheet is subjected to plasma surface treatment, the pouch sheet can be easily plasma surface-treated continuously and automatically. Particularly, only a portion of the pouch, especially the sealing portion is not plasma surface-treated, so that the subsequent processes can be very simple. As one example, when the plasma surface treatment is performed on four edge surfaces of a square pouch, continuous plasma surface treatment is not easy.

As shown in Figure 2, a single pouch (10) forming a single pouch-type secondary battery may be cut from a pouch sheet to form a rectangular thin sheet.

The pouch sheet may be formed by providing a polypropylene layer on the outer and inner surfaces of a thin aluminum plate. That is, when an encapsulating material is formed with the pouch sheet, the polypropylene outer surface forms the outer surface of the pouch and the polypropylene inner surface forms the outer surface of the pouch, whereby the thin aluminum plate is not exposed to external air and an internal electrolyte.

As shown, the edge surfaces (13, 14, 15, 16) of the single pouch (10) may form a sealing region (11). A cell region (12) where a battery cell closely contacts and an electrolyte is filled may be formed in the inner side region of the sealing region (11).

A folded portion (17) may be formed in the middle of the cell region (12), and after the battery cell is seated in the cell region (12) on any one of both sides of the folded portion, the left and right cell regions (12) and sealing regions (11) may be overlapped around the folded portion. Thereafter, the pouch sealing is performed through heat fusion of the sealing region (11).

In the case where there is no folded portion, the unit pouch (10) shown in Figure 2 may be an upper casing and a lower casing of a pouch casing. Since the upper casing and the lower casing are positioned to face each other, and then sealed, the sealing region (11) appears in the same aspect. However, if there is a folded portion, the sealing is unnecessary due to the folded portion, so that the sealing may be performed on three-line segments; and if there is no folded portion, the sealing may be performed on four-line segments.

If only the sealing region (11) shown in Figure 2 is subjected to plasma surface treatment, it can be known that the plasma surface treatment process becomes very complicated. First, the left and right edge surfaces (13, 14) must be intermittently plasma-treated, and then after rotating the pouch (10) 90 degrees, the upper and lower edge surfaces (15, 16) must be intermittently plasma-treated. Therefore, at least two plasma heads are needed, and the widths of the plasma heads may also be different from each other.

Ultimately, when only the sealing region (11) is subjected to plasma surface treatment, the plasma control is not easy and the device also becomes complicated. Particularly, the plasma surface treatment must be performed uniformly throughout the sealing region (11), but non-uniform plasma treatment regions may occur on the edge surfaces at the corners. This is because rotation of the pouch (10) is necessary when the entire sealing region (11) is subjected to the plasma treatment. At this time, the plasma surface treatment may not be performed on some portions and the plasma surface treatment may also be overlapped on some portions.

In addition, when only the sealing region (11) is subjected to plasma surface treatment, it must be performed after cutting the sheet-shaped pouch. This is because the traveling direction of the pouch with respect to the plasma treatment device must be changed. Therefore, it is not easy to plasma surface-treat the pouch sheet while transporting it in the roll-to-roll (R-to-R) form.

Meanwhile, according to one example of the present invention, only one side of the pouch corresponding to the inner surface of the pouch is plasma surface-treated, and then sealed, and the plasma surface treatment may be unnecessary for one side of the pouch corresponding to the outer surface of the pouch.

According to one example of the present invention, there is no need to change the position of the pouch, and particularly, the number of plasma heads can be reduced. As one example, it is possible to allow the sheet-shaped pouch to pass continuously through a single plasma head. Particularly, as shown in Figure 2, the plasma treatment can be performed on the entire pouch without dividing it into a sealing region (11) and a cell region (12). That is, the plasma surface treatment can be performed very easily on the entire polypropylene coating layer corresponding to the inner surface of the pouch.

Ultimately, according to this example, the plasma treatment is performed on the entire one side of the pouch sheet before cutting into single pouches and before sealing, thereby enabling very effective and easy device configuration and control logic.

Meanwhile, when the pouch sealing is performed on the unit pouch (10) shown in Figure 2, a temporary adhesion region (19) may be formed between the sealing region (11) and the cell region (12). The temporary adhesion region (19) may be referred to an adhesion region generated as the melted polypropylene moves from the sealing region (11) to the cell region (12) when the opposing polypropylene layers are heat-fused.

The temporary adhesion region (19) is a region where adhesion occurs in an unintended location during the heat fusion process, and crack generation in the temporary adhesion region (19) causes the internal metal layer of the pouch or lead to be exposed, which shortens the lifespan of the secondary battery, and becomes a factor of causing performance degradation by damaging the insulation. The crack generation in such a temporary adhesion region (19) is more likely to occur between the pouch and the lead rather than between the pouches.

The lead of the battery cell passes through the sealing region (11) from the cell region (12) and is located outside the pouch. The upper surface of the lead is heat-fused to the upper pouch case, and the lower surface of the lead is heat-fused to the lower pouch case. Due to the thickness of the lead, the sealing cross section is complicated, so that when the internal pressure of the pouch increases, there is a high possibility of stress concentration occurring. Therefore, problems with cracks occurring in the temporary adhesion region between the pouch and the lead may appear more frequently than in the temporary adhesion region between the pouches.

According to one example of the present invention, by intentionally lowering the sealing strength in the temporary adhesion region, the adhesion at unintended locations is prevented, whereby the poor insulation problem can be solved. Particularly, by significantly lowering the sealing strength in the temporary adhesion region between the pouch and the lead or eliminating adhesion in the temporary adhesion region, it is possible to provide a pouch-type secondary battery capable of improving durability and preventing performance degradation in advance.

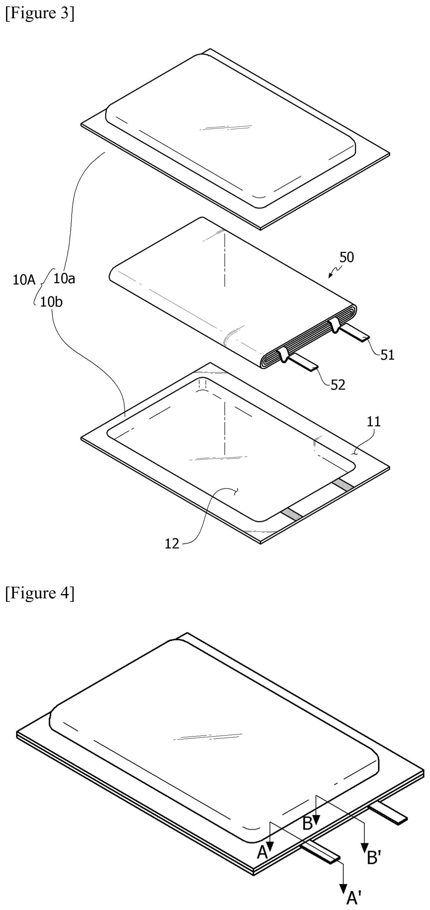

Figures 3 and 4 show one example of a pouch-type secondary battery in which unit pouches 10A are formed individually up and down, and then sealed together.

The upper pouch (10a) and the lower pouch (10b) may each be referred to as a unit pouch, and both may be plasma surface-treated, as described above.

The upper pouch (10a) and the lower pouch (10b) each have a sealing region (11) and a cell region (12), and a battery cell (50) is inserted into the cell region (12). The battery cell (50) has leads (51, 52), and the leads may be divided into a positive electrode lead (51) and a negative electrode lead (52).

Upon sealing of the pouch, the leads (51, 52) pass through the sealing region (11) from the cell region (12) and are exposed to the outside of the pouch-type secondary battery, as shown in Figure 4.

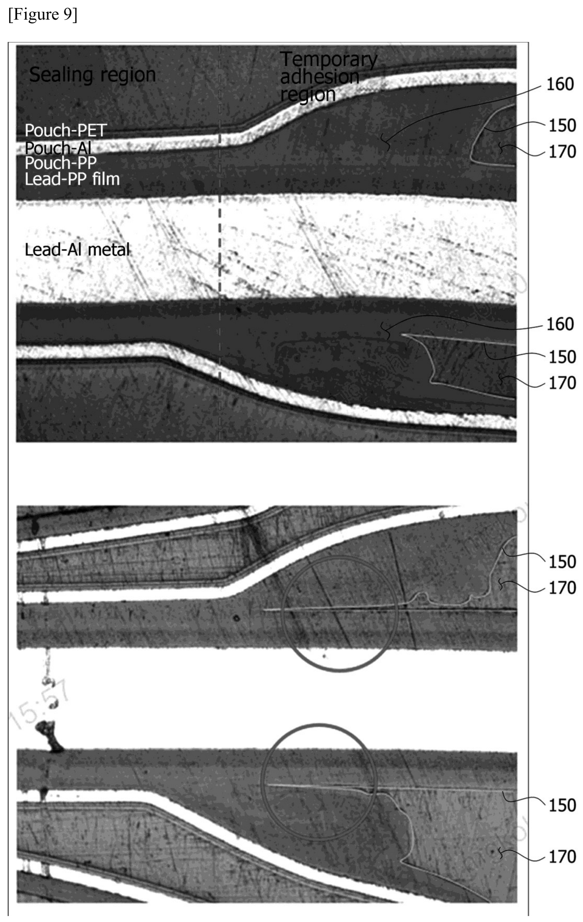

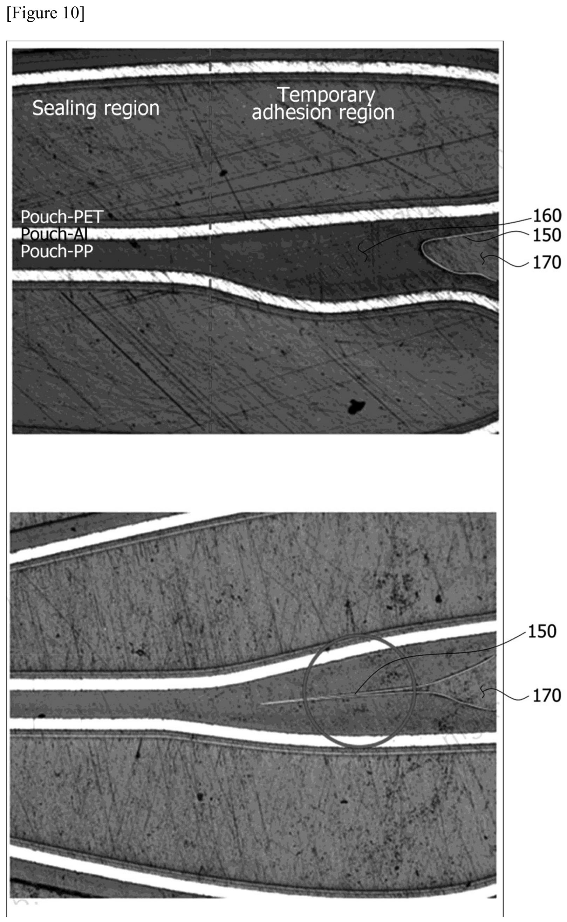

Figure 4 shows directions of AA' and BB' cross-sections. The AA' cross-section is a cross-section in which the pouches are sealed with a lead interposed therebetween, and the BB' cross-section is a cross-section in which the pouch and the pouch are sealed. Detailed descriptions of these cross-sectional images will be described below with reference to Figures 9 and 10.

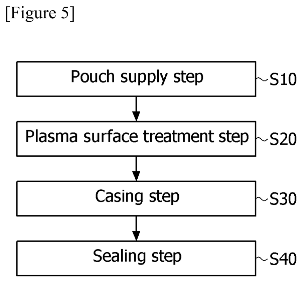

Hereinafter, a secondary battery manufacturing method according to one example of the present invention will be described in detail with reference to Figure 5.

The manufacturing process of a pouch-type secondary battery includes an electrode process, an assembly process, and a formation process, where it can be said that this example specifically relates to the assembly process.

First, a pouch forming a bag, that is, a case of a pouch-type secondary battery may be provided (S10). That is, a pouch supply step may be performed. Here, it is preferable that the pouch is a sheet-shaped pouch. Therefore, the pouch may be continuously moved on a moving stage using the roll-to-roll. Here, the moving stage may also be a horizontal plane-shaped stage or a roll-shaped stage.

When the moving stage is a horizontal plane-shaped stage, the moving stage may move linearly together with the sheet shaped-pouch, and the plasma surface treatment of the pouch may be performed during linear movement.

When the moving stage is in the form of a roll, the sheet-shaped pouch may move linearly while the roll rotates. Of course, the roll may only rotate in place without moving linearly. In this case, the pouch sheet may be supported on the roll, and the plasma surface treatment may be performed in a state where it is supported on the roll.

Here, it is preferable that the pouch sheet is a pouch sheet roll before cutting rather than a cut pouch for manufacturing a single pouch-type battery.

The plasma surface treatment is performed on the supplied pouch sheet (S20). That is, a plasma surface treatment step may be performed. As described above, the plasma surface treatment may be performed by continuously irradiating the surface of the pouch sheet with plasma gas from a plasma head. In this instance, it is preferable that the plasma head irradiates plasma gas substantially over the entire width of the pouch sheet. Therefore, as the pouch sheet passes through the plasma head at a constant speed, the plasma treatment may be performed on substantially the entire surface of the pouch sheet. Of course, the surface herein means a surface forming the inner surface of the pouch case later, the plasma treatment on the surface forming the outer surface of the pouch case later may be meaningless.

After the plasma treatment on the pouch sheet is completed, the pouch sheet is molded to form a pouch case together with the battery cell (S30). That is, a casing step may be performed. Specifically, a roll-shaped pouch sheet may be cut into unit pouches. A pouch case may be formed after the battery cell is in close contact with the cut unit pouch. At this time, to insert the battery cell, the pouch may be molded to form a space into which the battery cell is inserted. The unit pouch may be in a form where the upper case and the lower case of the pouch case are connected through a folded portion, or each of the upper case and the lower case separated from each other may also be referred to as the unit pouch.

After the pouch case, in which the battery cell is accommodated therein, is formed, the pouch case may be sealed (S40) through heat fusion. That is, a pouch sealing step may be performed. Here, the pouch sealing may be performed excluding a path through which an electrolyte may be injected into the pouch case. Then, after the electrolyte injection is performed, inlet sealing may be further performed.

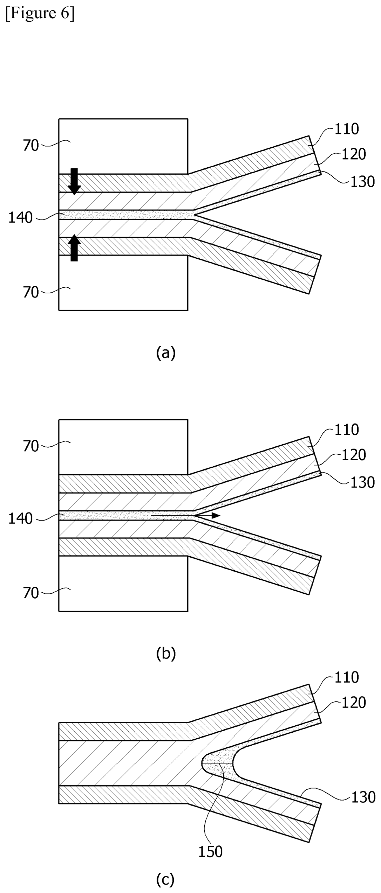

The sealing process will be described in more detail through Figure 6.

The pouch (10) may comprise a pouch layer (110) having an inner interlining, that is, a metal layer. The outer surface of the pouch layer (110) may be coated with a polyethylene (PET) layer. The inner surface of the pouch layer (110) may be coated with a polypropylene (PP) layer. As described above, it may comprise a surface layer (130) modified through the polypropylene plasma surface treatment and an unmodified deep layer (120).

Sealing blocks 70 move up and down at the edge portions of the pouches (10) facing each other to seal the pouches. In this instance, heat as well as compressive force is applied. As shown in (a) of Figure 6, during heat fusion, the opposing modified surface layers (130) are melted and bonded to each other to form one adhesive PP layer (140).

As the heat fusion progresses, the polypropylene layer moves to the cell region, whereby a temporary adhesion region is formed, as shown in (b) of Figure 6. At this time, among the PP layers, only the surface layer (130) rather than the deep layer (120) may be moved to the temporary adhesion region. That is, the modified PP with performing the plasma surface treatment, rather than the unmodified PP without performing the plasma surface treatment, moves to the temporary adhesion region.

As shown in (c) of Figure 6, the PP of the surface layer (130) moves to the temporary adhesion region, but it can be known that the upper PP surface layer and the lower PP surface layer are not bonded in the temporary adhesion region. That is, it can be known that in the temporary adhesion region, the upper PP surface layer and the lower PP surface layer only contact up and down based on the boundary surface, and are not bonded to each other.

Hereinafter, the plasma surface treatment method and configuration according to this example will be described in detail.

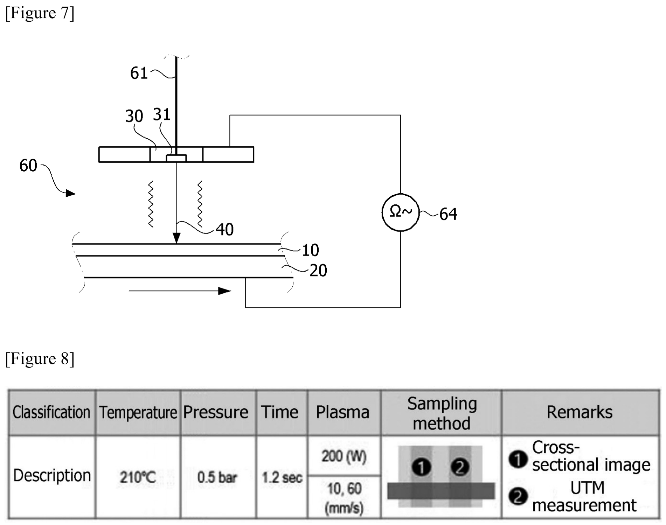

In this example, the plasma treatment technology may mean direct plasma. In the direct plasma, radicals, ions, and electrons in the plasma all act on a sample, and have high energy, whereby they easily break molecular bonds and form new bonds. When this applies to the plasma surface treatment of the pouch, it means that the pouch is placed in the plasma generation space. That is, as shown in Figure 7, this means that the plasma head (30) and the moving stage (20) perform positive electrode and negative electrode functions, respectively. The plasma gas is generated by applying an alternating current voltage between the plasma head (30) and the moving stage (20) and discharging the gas, and the generated plasma gas affects the pouch surface.

As shown in Figure 7, the plasma generator (60) comprises a moving stage (20) and a plasma head (30), where the moving stage (20) functions as a first electrode and the plasma head (30) functions as a second electrode. The first electrode may be a negative electrode, and in this case the second electrode becomes a positive electrode. The positive electrode and the negative electrode may be connected to the alternating current power supply (64) to provide power for plasma generation. That is, the space between the moving stage (20) and the plasma head (30) becomes a plasma generation space, and the plasma gas generated by discharging the gas acts on the surface of the pouch (10), whereby the plasma surface treatment may be performed.

The plasma head (30) is provided with a nozzle (31). Gas for discharge is irradiated toward the pouch (10) through the nozzle (31). The irradiated gas is discharged by a strong electric field formed in the space between the plasma head (30) and the moving stage (20), and converted into plasma gas.

The surface treatment may be performed as the plasma gas collides with the pouch surface by the pressure of the continuously irradiated gas to modify the polypropylene layer on the pouch surface.

When using the direct plasma, gas with a functional group, such as nitrogen or oxygen, may be discharged to act directly on a sample. However, the gas, such as nitrogen and oxygen, is difficult to turn into plasma at relatively low power. Accordingly, it is preferable to use argon gas, which can be converted into plasma through relatively low power.

That is, an argon atmosphere may be formed in the space between the plasma head (30) and the moving stage (20), and a small amount of nitrogen or oxygen may be irradiated. Argon plasma with high energy may transfer energy to nitrogen gas and oxygen gas to turn nitrogen and oxygen into plasma. Therefore, the argon gas at this time can be referred to a carrier gas supplying nitrogen and oxygen plasma gas to the pouch surface.

Eventually, it can be known that after the plasma treatment, radicals and the like react with the pouch surface made of polypropylene, thereby increasing the surface energy, and later, when melted due to high temperature, cohesion force occurs between different surfaces, whereby it is in a state that facilitates the sealing.

To verify the effect of improving the sealing strength of the pouch using the direct plasma, the following examples and comparative examples were conducted.

### - Example 1-

Nitrogen (N₂) gas of 40sccm and argon (Ar) gas of 6LPM were continuously sprayed, and the gases were discharged with a power of 200W to form plasma. The gas was converted into plasma while being sprayed through the plasma head (30) according to the gas flow rate. The pouch (10) passed through the spray section at a linear speed of 120mm/s. Afterwards, the pouch plasma surface-treated for 1.2 seconds under conditions of a temperature of 210 degrees Celsius and a pressure of 0.3MPa was heat-pressed to perform pouch sealing by heat fusion. Since the surface treatment effect of plasma has changes over time, the heat-pressing was performed within 5 minutes after the plasma surface treatment.

### - Example 2

The linear speed of the pouch was set to 60mm/s. Except for this, the conditions are the same as in Example 1.

### - Example 3

The linear speed of the pouch was set to 10mm/s. Except for this, the conditions are the same as in Example 1.

### - Comparative Example 1

The heat fusion sealing conditions are the same as in Example 1 without any plasma treatment.

Figure 8 is a table showing sealing process parameters, and sampling methods.

The sealing strength of the sealed pouch was measured by using the tensile strength measurement function of a universal testing machine (UTM) to measure the force from the sampling to the sealing rupture. The UTM was operated to break the sealing at a constant speed of 5mm/min, and the average of the force measured up to 8mm after the 4.5kgf measurement point was recorded.

As shown, a cross-section parallel to the longitudinal direction of the lead was used for cross-sectional image capture and sealing strength measurement.

Looking at Examples 1 to 3, it can be known that the plasma intensity is changed by changing the linear speed of the pouch. It can be known that the slower the pouch linear speed, the higher the intensity of plasma surface treatment. Besides, the intensity of plasma surface treatment can be increased by a method of increasing the discharge power or increasing the flow rate of the discharge gas.

Hereinafter, cross-sectional changes in the sealing region and temporary adhesion region will be described with reference to Figures 9 and 10.

In Figures 9 and 10, the upper region of the PET layer of the upper pouch and the lower region of the PET layer of the lower pouch are noises generated during cross-sectional imaging, so that they can be ignored. Also, the right-side region based on the boundary surface (150) is also a noise during cross-sectional imaging, so that it can be ignored.

(a) of Figure 9 shows a sealing cross section at the lead portion in Comparative Example 1, that is, when the plasma surface treatment is not performed, which is a case where the plasma surface treatment is not performed on the PP layers of both the pouch and the lead.

(b) of Figure 9 shows a sealing cross section at the lead portion in Example 3, that is, when the plasma surface treatment was performed at a relatively low intensity. This is a case where the plasma treatment is performed on the PP layer of the pouch and the plasma treatment is not performed on the PP layer of the lead.

Comparing (a) and (b) of Figure 9, it can be known that there is a significant difference in the location and shape of the boundary surface (150). The boundary surface (150) can be referred to a surface distinguishing the PP adhesive portion (160) from the empty space (170).

When the plasma surface treatment is not performed, it can be known regarding the boundary surface (150) that the boundary surface (150) occurs at a position further away from the boundary between the sealing region and the temporary adhesion region, and a adhesive portion (160), in which the PP layer of the pouch and the PP layer of the lead are not distinguished, occurs in the temporary adhesion region.

This can be regarded as the matter that the PP melted in the sealing region is pushed out to the temporary adhesion region and simultaneously adheres to the PP layer of the pouch and the PP layer of the lead in the temporary adhesion region to form a adhesive portion (160). That is, it can be regarded as the matter that the adhesive portion (160) is formed while the melted PP flows along the PP layer of the pouch and the PP layer of the lead.

When the plasma surface treatment is performed, it can be known that the boundary surface (150) occurs near the boundary between the sealing region and the temporary adhesion region, and the PP layer of the pouch and the PP layer of the lead do not form any adhesive portion to each other based on the boundary surface (150). It can be known that this boundary surface (150) appears in the form of up and down straight lines, and then forms a boundary with the empty space (170) as it moves away from the temporary adhesion region.

This can be regarded as the matter that the PP melted in the sealing region is pushed out to the temporary adhesion region and simultaneously tends to adhere to the surface-modified PP layer of the pouch, but does not tend to adhere to the non-surface-modified PP layer of the lead. That is, it can be regarded as the matter that the melted PP flows along the pouch PP layer, but does not flow along the lead PP layer, so that no adhesive portion will be formed. Therefore, since the PP layer of the ouch and the PP layer of the lead are positioned discontinuously based on the boundary surface (150) in the temporary adhesion region, it can be regarded as the matter that the strength in the temporary adhesion region is significantly lowered. Therefore, there is no possibility of de-adhesion of the PP layer of the pouch or PP layer of the lead in the temporary adhesion region, whereby it can be known that insulation defects due to de-adhesion can be prevented in advance.

(a) of Figure 10 shows a sealing cross section of the pouch in Comparative Example 1, that is, a case where the plasma surface treatment is not performed. It can be known that a temporary adhesion region has been formed, and the adhesion has been performed between the PP film of the pouch and the PP film of the pouch in the temporary adhesion region. The sealing strength in this temporary adhesion region is lower than that in the sealing region, but it has an unintended strength value or more, whereby it can be known that insulation defects can be caused.

This can be regarded as the matter that because the surface modification was not performed on the PP layer of the upper pouch and the PP layer of the lower pouch in the temporary adhesion region, the melted PP has a tendency which does not adhere to the upper and lower PP layers, but while the melted PP flows along the PP layer of the upper pouch and the PP layer of the lower pouch, the adhesive portion (160) is formed. Then, it can be regarded as the matter that in the temporary adhesion region, the melted PP adheres to both the upper PP layer and the lower PP layer to form a adhesive portion (160), thereby, eventually, continuously adhering to the upper and lower PP layers. Therefore, when the adhesive portion (160) is torn, the upper PP layer and the lower PP layer are pulled to cause de-adhesion of the PP layer, whereby insulation defects may occur.

(b) of Figure 10 shows a sealing cross section of a pouch in Example 3, that is, a case where the plasma surface treatment is performed at a relatively low intensity. As shown, it can be known that no adhesion has been performed between the PP film of the pouch and the PP film of the pouch in the temporary adhesion region.

This can be regarded as the matter that because the surface modification has been performed on the PP layer of the upper pouch and the PP layer of the lower pouch in the temporary adhesion region, the melted PP tends to adhere to the upper and lower PP layers. That is, the melted PP flows along the PP layer of upper pouch and the PP layer of the lower pouch, but has a greater tendency to adhere to the PP layer, a discontinuous boundary surface (150) may be formed between both.

Since the upper PP layer and the lower PP layer are discontinuous based on the boundary surface 150), it can be known that the adhesive portion is excluded from the temporary adhesion region, and thus the sealing strength will converge to zero. Therefore, it can be known that there is no possibility in which de-adhesion occurs in the temporary adhesion region, and thus, insulation defects due to de-adhesion can be prevented in advance.

Meanwhile, sealing defects of the pouch may occur more frequently due to the sealing between the pouch and the lead rather than the sealing between the pouches. Therefore, by comparing the pouch sealing strength trends and strength differences in the lead portion, the difference in effect depending on the presence or absence of plasma treatment can be seen more clearly.

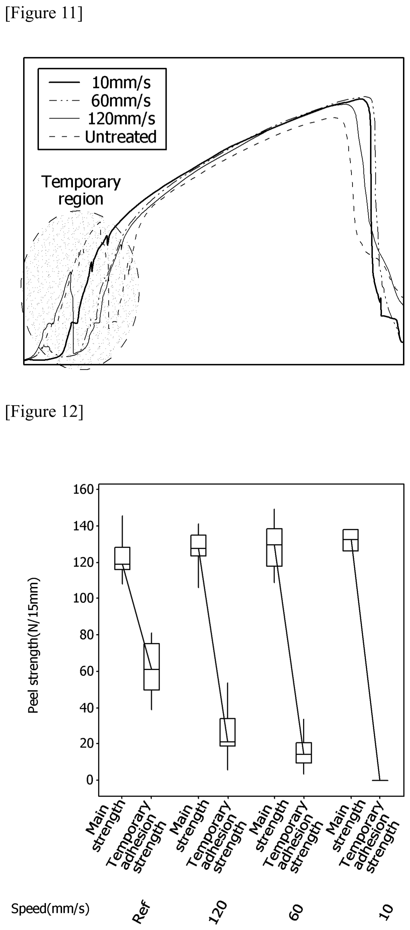

Figure 11 shows a change trend of sealing strength as it moves from the temporary adhesion region to the sealing region. In examples in which the plasma surface treatment has been performed, it can be known that the sealing strength in the temporary adhesion region is relatively low. Particularly, it can be known that the strength in the example where the plasma surface treatment intensity is low is even lower. On the other hand, when no plasma surface treatment is performed, it can be known that it has relatively very high sealing strength.

Meanwhile, it can also be confirmed through Figure 11 that the sealing strength in the sealing region is higher when the plasma surface treatment is performed.

Figure 12 shows main strengths and temporary adhesion strengths in Comparative Example and Examples. The main strength means the sealing strength in the sealing region.

It can be known that when the plasma surface treatment is not performed, the temporary adhesion strength is half of the main strength, whereas when the plasma surface treatment is performed, the temporary adhesion strength is less than 1/3 of the main strength. Particularly, it can be known that when the plasma surface treatment intensity is relatively small, the temporary adhesion strength is significantly lower than the main strength, and approaches zero.

Meanwhile, the present inventors could confirm through XPS analyses that the PP layer was modified through the plasma surface treatment. X-ray photoelectron spectroscopy (XPS) is also known as electron spectroscopy for chemical analysis (ESCA), which is a technique for analyzing surface chemical properties of a material. The XPS can measure not only the elemental composition but also the chemical and electronic states of atoms in the material.

It could be confirmed that when the plasma surface treatment was not performed and when the plasma surface treatment was performed, the ratio of carbon (C) in the atom ratios on the PP layer surface of the pouch decreased. That is, it could be confirmed that the PP layer surface modification was performed by decreasing the carbon ratio.

This may mean that by performing XPS analysis on the surface of the PP layer after the fact, it is possible to confirm whether plasma surface treatment has been performed or to distinguish the region where the plasma surface treatment has been performed and the region where the plasma surface treatment has not been performed.

It can be known that when the heat fusion is performed in the sealing region on the surface-modified PP layer by performing the plasma surface treatment, the sealing strength is improved through the increase in the adhesion force between the melted PP and the PP layer.

Meanwhile, pressurization is not performed in the temporary adhesion region near the sealing region. A difference in adhesion force between the melted PP pushed out to the temporary adhesion region and the PP layer of the pouch or lead may be artificially created. The adhesion force of the melted PP may increase between the plasma-treated PP layers, whereas the adhesion force of the melted PP may decrease between the non-plasma surface-treated PP layers. That is, the melted PP layer tends to flow along the plasma surface-treated PP layer. Using this difference, it is possible to significantly lower the sealing strength in the temporary adhesion region by preventing the formation of a adhesive portion that continues up and down in the temporary adhesion region.

### Industrial Applicability

It is described in the Detailed Description of Invention.

## Claims

1. A pouch-type secondary battery manufacturing device comprising:
a moving stage supporting a pouch before sealing, linearly moving the pouch in a first direction, and forming a plasma first electrode;
a plasma head forming a plasma second electrode, and irradiating the pouch surface with a gas for generating plasma gas to improve sealing strength of the pouch after sealing; and
an alternating current power supply applying alternating current power between the first electrode and the second electrode so that the plasma gas is irradiated to the pouch surface by discharging the gas.

2. The pouch-type secondary battery manufacturing device according to claim 1, **characterized in that**
the plasma head is provided to be spaced apart in a second direction perpendicular to the first direction.

3. The pouch-type secondary battery manufacturing device according to claim 2, **characterized in that**
the plasma head is fixed and provided to irradiate the surface of the pouch with the gas downward in a vertical direction.

4. The pouch-type secondary battery manufacturing device according to claim 3, **characterized in that**
the moving stage is provided to move the pouch at a constant speed, and the plasma head irradiates the surface of the pouch moving while being supported by the moving stage with the gas for generating the plasma gas.

5. The pouch-type secondary battery manufacturing device according to claim 1, **characterized in that**
the plasma head continuously supplies gas for plasma discharge at a constant flow rate.

6. The pouch-type secondary battery manufacturing device according to claim 5, **characterized in that**
the gas discharged during plasma generation contains argon (Ar).

7. The pouch-type secondary battery manufacturing device according to claim 6, **characterized in that**
the argon is continuously sprayed at a flow rate of 6LPM.

8. The pouch-type secondary battery manufacturing device according to claim 7, **characterized in that**
the gas discharged during plasma generation contains nitrogen (N₂) or oxygen (O₂).

9. The pouch-type secondary battery manufacturing device according to claim 8, **characterized in that**
the nitrogen or oxygen is continuously sprayed at a flow rate of 40 sccm.

10. The pouch-type secondary battery manufacturing device according to claim 5, **characterized in that**
the linear movement velocity of the pouch before sealing is 10mm/s to 120mm/s.

11. The pouch-type secondary battery manufacturing device according to claim 5, **characterized in that**
the alternating current power supply is provided to discharge gas with a power of 200W.

12. A method for manufacturing a pouch-type secondary battery comprising:
a pouch supply step of continuously moving a pouch sheet in which a metal layer is coated with a polypropylene layer on a moving stage;
a plasma surface treatment step of applying an alternating current power source between the moving stage and a plasma head, and discharging gas irradiated from the plasma head to irradiate the polypropylene layer surface of the pouch sheet with plasma gas;
a casing step of forming a pouch case with a battery cell having leads in which a metal layer is coated with a polypropylene layer by molding the plasma surface-treated pouch sheet; and
a pouch sealing step of sealing the pouch case by forming a sealing region through heat fusion, and
**characterized in that** in the pouch sheet, the plasma surface treatment is performed to the sealing region and a temporary adhesion region near the sealing region.

13. The method for manufacturing a pouch-type secondary battery according to claim 12, wherein
the plasma surface treatment is excluded in the lead penetrating the sealing region.

14. The method for manufacturing a pouch-type secondary battery according to claim 13, **characterized in that**
the sealing strength of the sealing region between the pouch sheet and the lead is three times or more greater than the sealing strength of the temporary adhesion region between the pouch sheet and the lead.

15. The method for manufacturing a pouch-type secondary battery according to claim 14, **characterized in that**
the sealing strength in the temporary adhesion region between the pouch sheet and the lead is less than 40N/15mm.

16. A pouch-type secondary battery comprising:
an upper pouch case having a metal layer and in which a polypropylene coating layer is formed on the lower surface, wherein the polypropylene coating layer is plasma surface-treated;
a lower pouch case having a metal layer and in which a polypropylene coating layer is formed on the upper surface, wherein the polypropylene coating layer is plasma surface-treated; and
a battery cell having leads having a metal layer and in which polypropylene coating layers are formed on the upper and lower surfaces, and when the upper pouch case and the lower pouch case are sealed by heat fusion, the upper and lower surfaces of the leads are each heat-fused between the upper pouch case and the lower pouch case, and
**characterized in that** in the pouch sheet, the plasma surface treatment is performed to the sealing region and a temporary adhesion region near the sealing region.

17. The pouch-type secondary battery according to claim 16, **characterized in that**
the plasma surface treatment of the polypropylene coating layer in the lead is excluded.

18. The pouch-type secondary battery according to claim 17, **characterized in that**
the sealing strength of the sealing region between the upper or lower pouch case and the lead is three times or more greater than the sealing strength of the temporary adhesion region between the upper or lower pouch sheet and the lead.

19. The method for manufacturing a pouch-type secondary battery according to claim 17, **characterized in that**
the sealing strength in the temporary adhesion region between the pouch sheet and the lead is less than 40N/15mm.

20. The pouch-type secondary battery according to claim 16, **characterized in that**
in the pouch sheet, a carbon atom ratio on the plasma surface-treated surface is reduced compared to a carbon atom ratio on the non-plasma surface-treated surface.
